# DEMANDE DE BREVET EUROPEEN

(11) **EP 0 574 329 A1**
(43) Date de publication de la demande: **15.12.1993**
(21) Numéro de dépôt: 93420169.0
(22) Date de dépôt: 26.04.1993
(51) Int. Cl.: H04L 25/38

(54) **Récepteur utilisant un suréchantillonage pour éliminer des impulsions de bruit**

(30) Priorité: 12.05.1992 FR 9205846
(71) Demandeur: SCHNEIDER ELECTRIC SA, F-92100 Boulogne-Billancourt (FR)
(72) Inventeur: Corcoles Vincent, Merlin Gerin, F-38050 Grenoble Cedex 09 (FR)
(74) Mandataire: Jouvray, Marie-Andrée

(57) **Abrégé**

Les signaux transmis (SI) sur des lignes de communication en milieu perturbé peuvent être affectés par des parasites (P5 à P8). Un dispositif de filtrage numérique élimine ces parasites par une détection appropriée des états logiques des signaux numériques. Les signaux reçus sont échantillonnés à une fréquence supérieure au débit d'information numérique, puis la détection d'un état est effective lorsque un nombre minimum d'échantillons parmi un nombre prédéterminés d'échantillons successifs est atteint. Le dispositif de filtrage restitue les fronts montants (FMf1, FMf2) et descendants (FDf1, FDf2), ainsi que les états hauts (EHf) et bas (EBf) sans altération de l'information.

Application : Environnement électromagnétique très perturbé, notamment les liaisons de communication avec les disjoncteurs.

## Description

L'invention concerne un dispositif de réception de signaux numériques comportant des moyens d'entrée fournissant des signaux de sortie représentatifs de l'état logique des signaux numériques appliqués à l'entrée du dispositif de réception, un circuit de traitement et des moyens de filtrage des parasites.

Les liaisons entre appareils électroniques en milieu industriel perturbé sont souvent réalisées par des lignes de transmission qui véhiculent des informations numériques sous forme série ou parallèle. Les lignes peuvent être en mode synchrone ou asynchrone. Pour la protection de ces lignes, il est connu de blinder les liaisons par l'utilisation de câbles spéciaux dont le blindage est mis à la masse générale de l'installation électrique ou à la terre. Cependant, dans certains cas, il arrive que des signaux de forte énergie atteignent le récepteur. Des dispositifs d'écrêtage éliminant les surtensions de façon à protéger les composants électroniques, et des filtres analogiques, réalisés avec des cellules RC ou LR, permettent de réduire les effets indésirables des parasites. Ces liaisons perturbées se trouvent par exemple à proximité d'appareils de coupure de fort courant ou de haute tension tels que disjoncteurs ou interrupteurs.

Les lignes de transmission en milieu industriel sont très affectées par des perturbations électromagnétiques, et les parasites qui se superposent aux signaux utiles sont très difficiles à éliminer complètement. Le blindage des câbles de liaison, la protection par écrêtage des surtensions et le filtrage analogique permettent de remonter considérablement le niveau de susceptibilité électromagnétique. Mais pour des niveaux de perturbation très élevés, ces moyens sont insuffisants et les signaux portant l'information peuvent présenter des défauts inacceptables.

L'invention a pour but un dispositif de filtrage numérique permettant d'éliminer les parasites présents sur les signaux portant l'information.

Selon l'invention, ce but est atteint par le fait que les moyens de filtrage comportent des moyens de filtrage numérique connectés entre les moyens d'entrée et le circuit de traitement, les moyens de filtrage numérique comportant des moyens d'échantillonnage des signaux de sortie des moyens d'entrée et des moyens d'analyse, pendant une période d'analyse d'un premier nombre prédéterminé d'échantillons successifs, les moyens d'analyse comportant des moyens de détermination du nombre d'échantillons ayant un premier état logique pendant la période d'analyse, de manière à fournir en sortie un signal ou premier état logique si le nombre d'échantillons dans cet état est supérieur à une valeur prédéterminée.

Selon un développement de l'invention, il comporte une pluralité de moyens de filtrage ayant des premiers nombres différents et des valeurs prédéterminées différentes. De cette manière, il est possible d'appliquer des critères de filtrage différents pour la détection de fronts.

De préférence ladite valeur prédéterminée est supérieure ou égale à la moitié dudit premier nombre.

D'autres avantages et caractéristiques ressortiront plus clairement de la description qui va suivre, de modes particuliers de réalisation de l'invention, donnés à titre d'exemples non limitatifs, et représentés aux dessins annexés, sur lesquels:

La figure 1 représente le schéma bloc d'un système de communication.

La figure 2 montre des dispositifs de protection et de filtrage associés à un récepteur de communication.

La figure 3 montre l'influence des perturbations sur les lignes de transmission et des parasites sur la détection des transitions de signaux.

La figure 4 montre la position d'un filtre numérique selon l'invention.

La figure 5 représente les signaux initiaux, perturbés, puis filtrés selon un mode de réalisation de l'invention.

La figure 6 représente des signaux de transmission, fonctionnant en mode synchrone, et filtrés selon un mode de réalisation de l'invention.

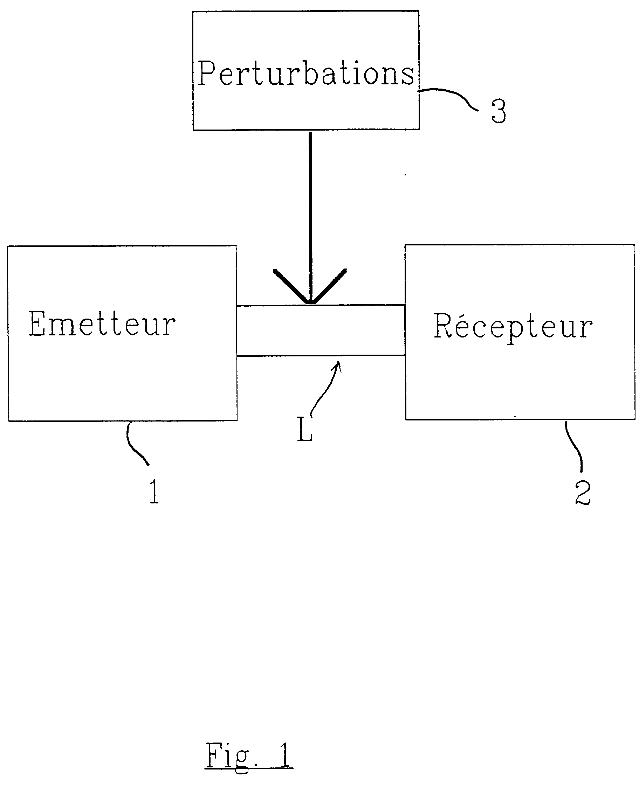

Le schéma bloc de la figure 1 représente un système de communication entre un émetteur 1 et un récepteur 2 situés dans un milieu industriel perturbé. L'émetteur peut être inclus dans un disjoncteur, soit à l'intérieur d'un déclencheur électronique associé, soit dans un circuit auxiliaire, alors que le récepteur peut faire partie des circuits auxiliaires externes et distants du disjoncteur, tels que des boîtiers de signalisation, de télécommande ou de connexion à un réseau. Une liaison L entre l'émetteur 1 et le récepteur 2 peut donc se trouver dans un environnement où les perturbations électromagnétiques 3 sont fortes. Ces perturbations ont généralement un temps de montée et de descente très court, ce qui leur donne un spectre de fréquence très élevé. Dans cet environnement perturbé, la liaison L reçoit, par induction électromagnétique ou par couplage capacitif, de l'énergie sous la forme de courants ou tensions transitoires, parasites, qui s'ajoutent aux signaux normalement transmis par la liaison.

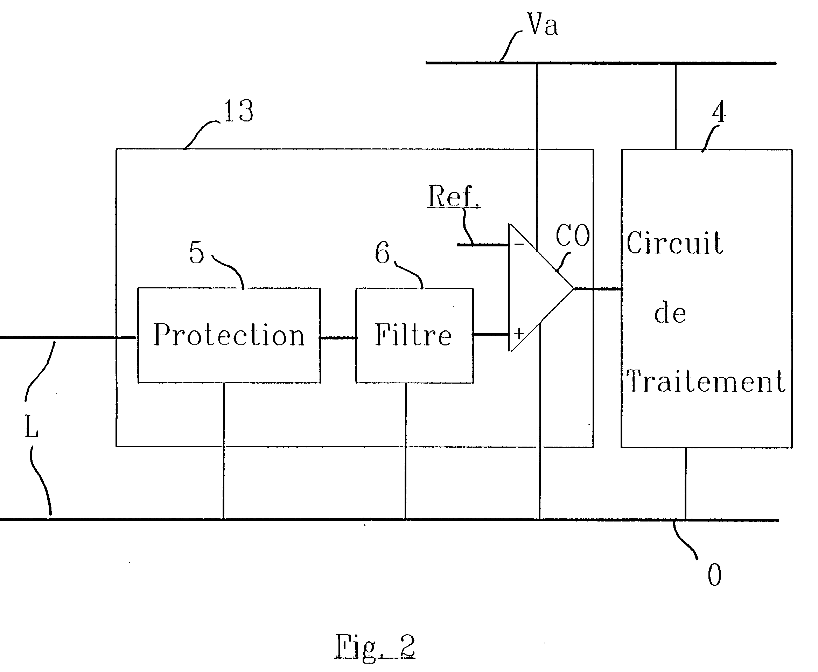

De façon connue, les circuits d'entrée d'un récepteur 2, tel que celui de la figure 2, possèdent des circuits de protection 5 qui écrêtent les signaux lorsque leur tension dépasse des valeurs limites positives ou négatives. Ensuite, un filtre analogique 6 élimine une grande partie des parasites sans perturber le signal utile. Généralement le filtre est constitué par des cellules de type passe-bas réalisées avec des résistances et condensateurs ou avec des selfs et résistances, mais l'efficacité de ce type de filtre n'est pas toujours suffisante pour une grande fiabilité de la transmission.

De façon simple et connue, la différenciation entre un état bas et un état haut d'un signal est réalisée par un circuit de comparaison CO. le circuit 5, le filtre 6 et le circuit de comparaison CO constituent un circuit d'entrée 13 du récepteur 2.

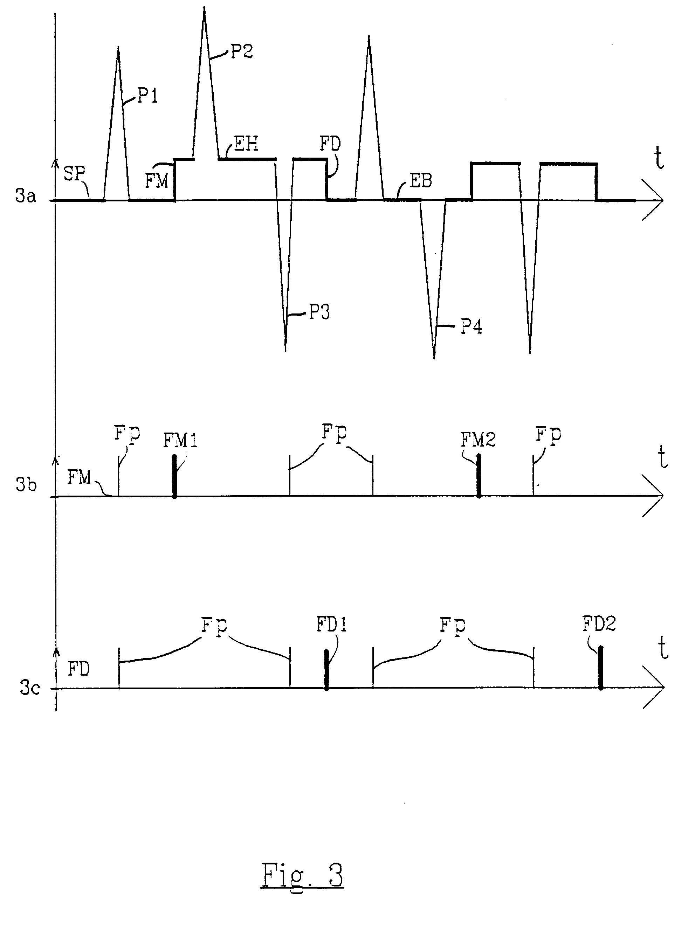

Lorsque le signal issu du filtre est inférieur à un seuil Ref, le signal est considéré comme étant à l'état bas, sinon il est considéré comme étant à l'état haut. Les signaux de sortie du circuit de comparaison sont ensuite orientés vers un circuit 4 de traitement destiné à la gestion de la communication. Le circuit 4 de traitement est de façon connue, construit autour d'un microprocesseur. Le circuit de comparaison CO et le circuit 4 de traitement peuvent être réalisés dans un même circuit intégré et avoir une alimentation commune Va,O. Dans le cas où les signaux transmis sont des signaux numériques, le circuit de traitement peut détecter les états des signaux logiques, et/ou les transitions de signaux entre ces états. La détection de transitions, fronts montants ou fronts descendants, est très sensible aux parasites. La figure 3 montre la détection de fronts d'un signal numérique perturbé par des parasites. Le signal SP (courbe 3a) chargé de parasites peut prendre des états haut EH et des états bas EB entre lesquels doivent être détectés des fronts montants FM et des fronts descendants FD. Le signe des parasites étant aléatoire, il peut provoquer la détection erronée de fronts montants (courbe 3b) et/ou descendants (courbe 3c). Un parasite positif P1 apparaissant sur un état bas ou un parasite négatif P3 apparaissant sur un état haut génèrent le détection de fronts Fp montants (courbe 3b) et descendants (courbe 3c). Par contre, un parasite positif P2 sur un état haut ou un parasite négatif P4 sur un état bas ne génèrent pas de détection de fronts. Ainsi des fronts parasites Fp sont mêlés aux vrais fronts FM1, FM2, FD1 et FD2 (courbes 3b et 3c).

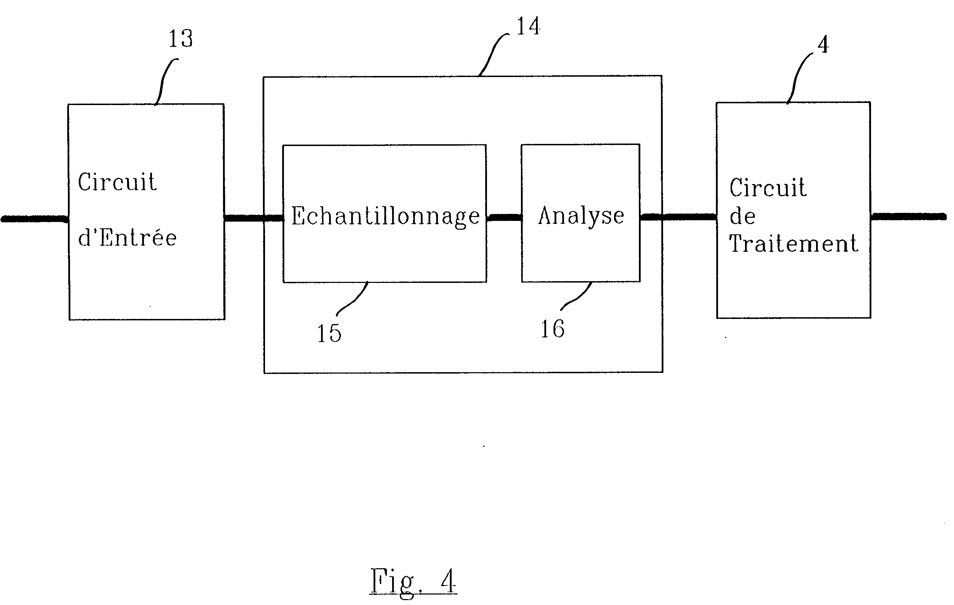

Pour assurer une bonne réjection de ces parasites (figure 4), un filtre numérique 14 est interposé entre le circuit d'entrée 13 et le circuit de traitement 4. Le filtre numérique 14 échantillonne, ou lit à intervalles réguliers, et met en mémoire dans un circuit d'échantillonnage 15, les signaux de sortie du circuit 13, représentatifs de l'état perturbé des signaux transmis sur la ligne L.

La fréquence d'échantillonnage doit être plus élevée que le débit de l'information transmise et plus faible que l'inverse de la durée d'un parasite. Ces échantillons sont analysés dans un circuit d'analyse 16 qui fournit en sortie, après filtrage, au circuit de traitement 4, des signaux logiques représentatifs de l'état des signaux transmis sur la ligne L, après élimination des parasites. Un état logique est considéré comme vrai, par le circuit 16, lorsqu'une certaine proportion d'échantillons correspondant à cet état est atteinte. Cette proportion est calculée à chaque période d'échantillonnage pour une période d'analyse comportant un nombre prédéterminé d'échantillons successifs. Dans un mode de réalisation particulier de l'invention, la détection d'un état haut ou bas, est validée si au moins 4 échantillons sur 8 échantillons successifs sont à l'état haut, ou respectivement bas. La détection de fronts peut se faire sur un nombre d'échantillons plus faible. Par exemple, si le circuit de traitement 4 doit détecter des fronts, le circuit 16 peut n'utiliser que 4 échantillons successifs pour détecter un état, celui-ci étant considéré comme vrai si au moins 3 échantillons sur 4 sont dans cet état.

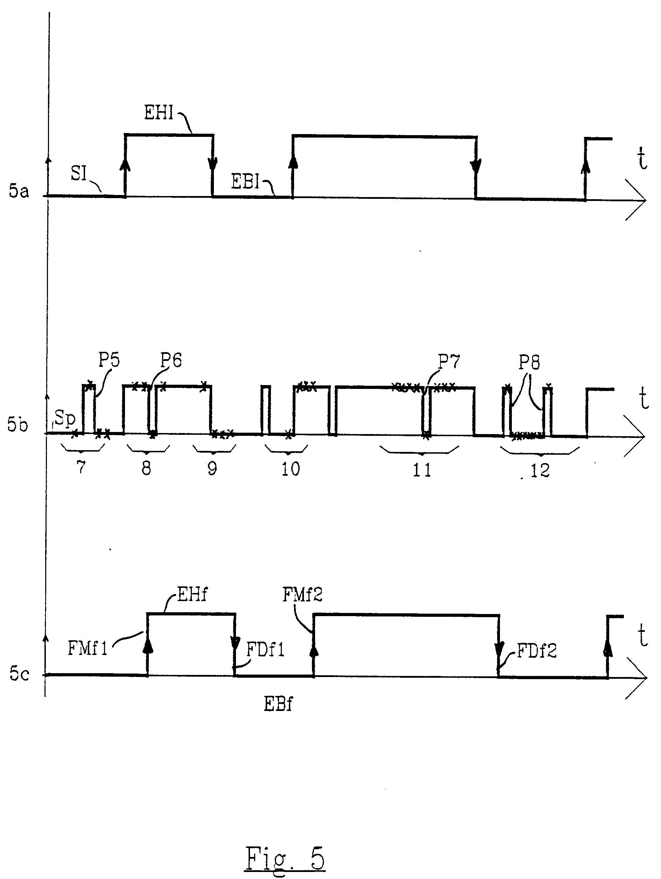

Pour un signal SI (figure 5, courbe 5a) présentant un état haut EHI et un état bas EBI, un signal perturbé peut être de la forme représentée en Sp (courbe 5b). Pendant la période d'analyse 7, 3 échantillons sur 4 sont à l'état bas et le filtre 14 fournit en sortie un état bas.
Le parasite P5 n'altère donc pas le résultat. De façon analogue, pendant la période d'analyse 8, 3 échantillons sur 4 sont à l'état haut et les front descendant du parasite P6 n'est pas détecté. Par contre, pendant la période d'analyse 9, le passage à l'état bas et pendant la période d'analyse 10 le passage à l'état haut sont détectés. Sur la courbe 5b, les périodes d'analyse 7 à 10 correspondent à 4 échantillons, les états ainsi détectés étant appliqués à l'entrée du circuit de traitement 4 pour une détection des fronts. Les périodes d'analyse 11 et 12 comportent chacune 8 échantillons pour permettre une détection des états par le circuit de traitement 4. Pendant la période d'analyse 11, 7 échantillons sur 8 sont à l'état haut, ce qui élimine le parasite P7. Les deux parasites P8 ne modifient pas la détection de l'état bas lors de la période d'analyse 12. Les fronts de montée FMf1 et FMf2 et de descente FDf1 et FDf2 ainsi que les états hauts EHf et bas EBf filtrés (courbe 5c) ne présente plus aucun parasite.

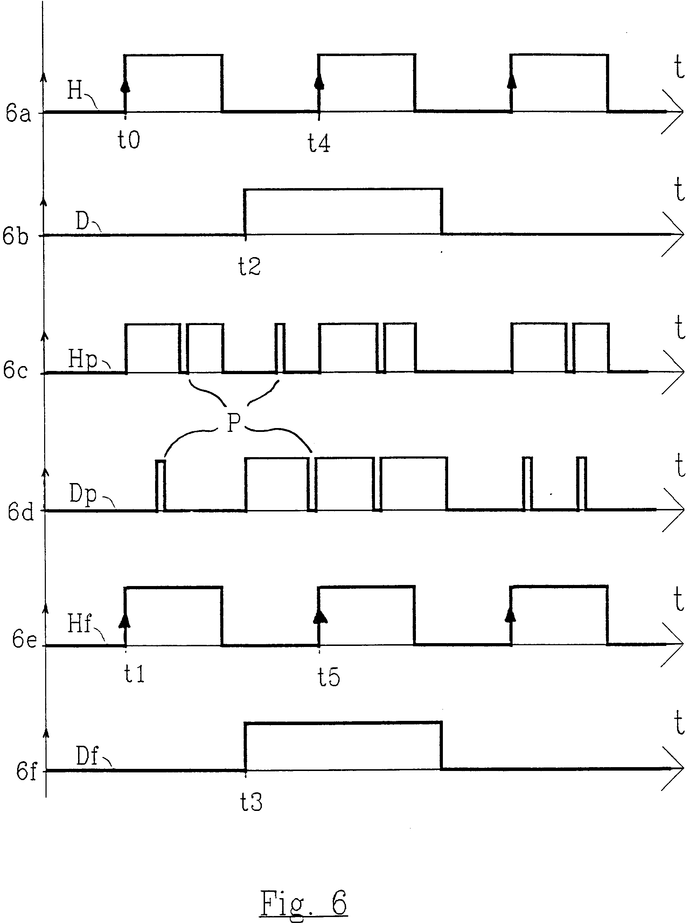

La figure 6 montre une application de l'invention, à un système de transmission série de type synchrone. Dans un tel système de transmission, deux signaux sont transmis, à savoir un signal de données D (courbe 6b) et un signal d'horloge H (courbe 6a) destiné à valider l'état de la donnée sur ses fronts montants. Le front montant de l'horloge doit valider un état bas au temps to, alors qu'au temps t4, il doit valider un état haut du signal de donnée. Des signaux perturbés de l'horloge Hp (courbe 6c) et de donné Dp (courbe 6d) présentent des parasites P qui feraient valider des données supplémentaires erronées en l'absence de mesure particulière. Un filtrage numérique, du même type que sur la figure 4, appliqué respectivement à chacun des signaux Hp et Dp, élimine les parasites et fournit les signaux filtrés Hf (courbe 6e) et Df (courbe 6f). Les signaux issus du filtrage sont en retard par rapport aux signaux initiaux. Ce retard, correspondant à une période d'analyse, se retrouve à la fois sur le signal d'horloge (t1 - t0 et t5 - t4) et sur le signal de donnée (t3 - t2) ce qui permet de ne pas perturber la synchronisation des signaux.

Dans un mode particulier de réalisation, les fonctions des circuits de comparaison CO, d'échantillonnage 15, d'analyse 16 et de traitement 4 peuvent être réalisées au moyen d'un microprocesseur commun.

Le filtre numérique décrit ci-dessus est particulièrement adapté aux liaisons entre émetteur et récepteur en milieux perturbés. Il peut s'appliquer aux liaisons séries comme aux liaisons parallèles. Les modes de réalisation qui ont été décrits tiennent compte de deux états logiques (haut et bas), mais l'invention peut être appliquée à des signaux comportant plusieurs états logiques distincts. Par exemple, pour un signal qui comporte 4 états logiques représentés par quatre niveaux de tension, un état peut être détecté lorsque au moins quatre échantillons sur huit correspondent à cet état. La lecture des états ou des fronts peut être réalisée simultanément ou séquentiellement, avec un nombre variable d'échantillons successifs et un nombre minimal d'échantillons variable. De façon préférentielle, le filtre numérique peut être intégré au microprocesseur du circuit de traitement chargé de la gestion de la ligne de transmission dans le récepteur, mais il peut prendre d'autres formes, notamment un circuit de filtrage indépendant du microprocesseur principal du récepteur.

## Revendications

1. Dispositif de réception de signaux numériques comportant des moyens d'entrée (13) fournissant des signaux de sortie (Sp, Hp, Dp) représentatifs de l'état logique des signaux numériques appliqués à l'entrée du dispositif de réception, un circuit de traitement (4) et des moyens de filtrage des parasites, dispositif caractérisé en ce que les moyens de filtrage comportent des moyens de filtrage numérique (14) connectés entre les moyens d'entrée (13) et le circuit de traitement (4), les moyens de filtrage numérique comportant des moyens (15) d'échantillonnage des signaux de sortie des moyens d'entrée et des moyens (16) d'analyse, pendant une période d'analyse (7 à 12) d'un premier nombre prédéterminé d'échantillons successifs, les moyens d'analyse comportant des moyens de détermination du nombre d'échantillons ayant un premier état logique pendant la période d'analyse, de manière à fournir en sortie un signal (5c, 6e, 6f) ou premier état logique si le nombre d'échantillons dans cet état est supérieur à une valeur prédéterminée.

2. Dispositif selon la revendication 1, caractérisé en ce qu'il comporte une pluralité de moyens de filtrage ayant des premiers nombres différents et des valeurs prédéterminées différentes.

3. Dispositif selon l'une des revendications 1 et 2, caractérisé en ce que ladite valeur prédéterminée est supérieure ou égale à la moitié dudit premier nombre.

4. Dispositif selon l'une quelconque des revendicatins 1 à 3, caractérisé en ce que les signaux numériques peuvent prendre au moins deux états logiques.

5. Dispositif selon l'une quelconque des revendications 1 à 4, caractérisé en ce que les moyens de filtrage numérique (14) sont intégrés dans le circuit de traitement (4).
